# EUROPÄISCHE PATENTSCHRIFT

(11) **EP 3 569 338 B1**
(45) Veröffentlichungstag und Bekanntmachung des Hinweises auf die Patenterteilung: **03.08.2022**
(21) Anmeldenummer: 19000226.1
(22) Anmeldetag: 13.05.2019
(51) Int. Cl.: B23F 19/12, B23F 19/00

(54) **VERFAHREN ZUM SCHLEIFENDEN NACHBEARBEITEN VON ZAHNRÄDERN**
METHOD FOR ABRASIVE FINISHING OF GEARS
PROCÉDÉ D'USINAGE ABRASIF ULTÉRIEUR DE ROUES DENTÉES

(30) Priorität: 16.05.2018 DE 102018111814
(43) Veröffentlichungstag der Anmeldung: 20.11.2019
(73) Patentinhaber: Klingelnberg GmbH, 42499 Hückeswagen (DE)
(72) Erfinder: Schalaster, Rolf, D-42929 Wermelskirchen (DE)
(74) Vertreter: Janke Scholl Patentanwälte PartG mbB

(56) Entgegenhaltungen:
- EP-A1- 2 891 539
- EP-A1- 3 120 960
- DE-A1- 10 211 129
- US-B1- 6 234 880

## Beschreibung

Die vorliegende Erfindung betrifft ein Verfahren zum schleifenden Nachbearbeiten von Zahnrädern, insbesondere von Kegelrädern, gemäß dem Oberbegriff des Anspruchs 1. Ein derartiges Verfahren ist aus dem Dokument EP 2 891 539 A1 bekannt.

### Stand der Technik

Bei Helikoptern kommen im Bereich des Antriebsstranges, der den Rotor antreibt, Kegelrad-Getriebe (auch Rotorgetriebe genannt) zum Einsatz. Ein solches Kegelrad-Getriebe kann beispielsweise ein Ritzel und ein Tellerrad umfassen, um Drehbewegungen zwischen zwei nicht parallelen Wellen übertragen zu können und um für eine Untersetzung zu sorgen.

Die Anforderungen an solche Kegelräder sind beispielsweise bei Helikoptern besonders hoch. Neben hoher Leistungsdichte und guten Notlaufeigenschaften führen die in Leichtbauweise ausgeführten Getriebegehäuse zu zusätzlichen Anforderungen der Lauffähigkeit bei großen Relativverlagerungen. Entsprechend präzise sind die Herstelltoleranzen, die für die Herstellung solcher Kegelrad-Getriebe gelten.

Da die Lagerung von Getrieben, die in der Luftfahrt eingesetzt werden, möglichst leicht sein muss, kann es von leichten Verwindungen kommen. Eine solche Verwindung kann zur Folge haben, dass sich die Achslage zweier Zahnräder, die miteinander in einem Getriebe gepaart sind, leicht ändert. Um auch beim Auftreten hoher Drehmomente ein problemloses Abrollen der Zahnräder zu gewährleisten, werden im Übergangsbereich zwischen den Zahnflanken und dem Zahnkopf Kopfkantenrundungen vorgesehen.

Man setzt für Anwendungen in der Luftfahrt z.B. auf Kegelräder mit geschliffenen Zahnflanken, die eine Qualität von 3 haben, und deren Zähne mit Kopfkantenrundungen versehen sind.

Von daher liegt der Erfindung die Aufgabe zugrunde, ein Verfahren bereit zu stellen, das eine hochgenaue und toleranzhaltige Fertigung von Kopfkantenrundungen ermöglicht. Die Fertigung der Kopfkantenrundungen soll effizient und reproduzierbar sein.

Die Aufgaben werden erfindungsgemäß durch ein Verfahren gemäß Patentanspruch 1 gelöst. Vorteilhafte Ausgestaltungen der Erfindung bilden die Gegenstände der abhängigen Ansprüche.

Erfindungsgemäß wird diese Aufgabe durch ein Verfahren gemäß Anspruch 1 zum schleifenden Nachbearbeiten eines bereits verzahnten Zahnrad-Werkstücks gelöst, wobei dieses Verfahren in einer NC-gesteuerten Bearbeitungsmaschine ausgeführt wird. Das Verfahren umfasst die Schritte:
a. Bereitstellen des Zahnrad-Werkstücks in der Bearbeitungsmaschine,
b. Bereitstellen eines ersten Schleifwerkzeugs in der Bearbeitungsmaschine,
c. Bereitstellen eines zweiten Schleifwerkzeugs in der Bearbeitungsmaschine,
d. schleifendes Bearbeiten von mindestens einer Zahnflanke des Zahnrad-Werkstücks mit dem ersten Schleifwerkzeug in der Bearbeitungsmaschine,
e. schleifendes Bearbeiten mindestens einer Zahnflanke im Übergangsbereich zum Zahnkopf des Zahnrad-Werkstücks mit dem zweiten Schleifwerkzeug in der Bearbeitungsmaschine, um eine Kopfkantenrundung zu erzeugen, und
f. nach dem Schleifen der Kopfkantenrundung gemäß Schritt e. weiteres schleifendes Bearbeiten mindestens der Zahnflanke des Zahnrad-Werkstücks mit dem ersten Schleifwerkzeug und/oder dem zweiten Schleifwerkzeug in der Bearbeitungsmaschine.

Gemäß Erfindung werden mindestens die Schritte d., e. und f. in der genannten Reihenfolge durchgeführt, da sich diese spezielle Aufeinanderfolge der Schritte eine hochgenaue Fertigung der Kopfkantenrundungen ermöglicht wird und da Grate, die eventuell im Schritt e. im Bereich der Zahnflanken entstehen können, im Schritt f. zuverlässig entfernt werden.

Bei mindestens einem Teil der Ausführungsformen wird das Verfahren so ausgeführt, dass im Schritt d. alle konkaven Zahnflanken des Zahnrad-Werkstücks und/oder alle konvexen Zahnflanken des Zahnrad-Werkstücks mit dem ersten Schleifwerkzeug geschliffen werden, bevor im Schritt e. mehrere Kopfkantenrundungen erzeugt werden.

Bei mindestens einem Teil der Ausführungsformen zeichnet sich das Verfahren dadurch aus, dass die Schritte d., e. und f. in einer Aufspannung des Zahnrad-Werkstücks in der Bearbeitungsmaschine ausgeführt werden. Durch diese Vorgabe entfällt ein Umspannen des Zahnrad-Werkstücks. Ein solches Umspannen kann Ungenauigkeiten in das Verfahren einführen.

Bei mindestens einem Teil der Ausführungsformen zeichnet sich das Verfahren dadurch aus, dass es in einer Bearbeitungsmaschine zum Einsatz kommt, die für die Zwecke der Erfindung eine erste Werkzeugspindel zum Einspannen des ersten Schleifwerkzeugs und eine zweite Werkzeugspindel zum Einspannen des zweiten Schleifwerkzeugs umfasst. Das Verfahren der Erfindung lässt sich in einer solchen Maschine, die zwei separate Werkzeugspindeln umfasst, besonders effizient und genau durchführen.

Bei mindestens einem Teil der Ausführungsformen zeichnet sich das Verfahren dadurch aus, dass
- vor dem Schritt d. eine relative Zustellbewegung ausgeführt wird, um das erste Schleifwerkzeug relativ zu dem Zahnrad-Werkstück in eine Ausgangsposition zu bringen,
- vor dem Schritt e. eine relative Zustellbewegung ausgeführt wird, um das zweite Schleifwerkzeug relativ zu dem Zahnrad-Werkstück in eine Ausgangsposition zu bringen,
- vor dem Schritt f. eine relative Zustellbewegung ausgeführt wird, um das erste Schleifwerkzeug relativ zu dem Zahnrad-Werkstück in eine Ausgangsposition zu bringen.

Das Verfahren wurde dazu entwickelt nach einer Temperaturbehandlung des Zahnrad-Werkstücks durchgeführt zu werden, da im Rahmen der Schritte d. und f. Härteverzüge entfernt und die gewünschte Oberflächenqualität der Zahnflanken geschliffen werden kann. Das Verfahren wird auch als Verfahren zum schleifenden Hart-Nachbearbeiten bezeichnet. Das Verfahren kann aber auch auf weiche Zahnrad-Werkstücke angewendet werden.

Bei mindestens einem Teil der Ausführungsformen zeichnet sich das Verfahren dadurch aus, dass im Schritt e. die Kopfkantenrundungen mittels NC-gesteuerter Bewegungen des zweiten Schleifwerkzeugs relativ zum Zahnrad-Werkstück erzeugt werden. Dadurch, dass das Schleifen der Kopfkantenrundungen durch den Einsatz/die Kontrolle einer NC-Steuerung erfolgt, kann dieser Vorgang mit hoher Präzision und Formhaltigkeit vorgenommen werden.

Bei mindestens einem Teil der Ausführungsformen kommen eine NC-Steuerung oder ein Softwaremodul zum Einsatz, die/das Teil der Bearbeitungsmaschine ist oder die/das mit der Bearbeitungsmaschine verbindbar ist.

Das Verfahren lässt sich besonders vorteilhaft bei einem Zahnrad-Werkstück anwenden, das zur Verwendung in einem Helikopter oder Flugzeug bereitgestellt wird.

Die Erfindung lässt sich nicht nur auf Kegelräder anwenden, sondern sie kann z.B. auch bei Stirnrädern angewendet werden.

### ZEICHNUNGEN

Ausführungsbeispiele der Erfindung werden im Folgenden unter Bezugnahme auf die Zeichnungen näher beschrieben.
- **FIG. 1**: zeigt eine schematische Perspektivansicht eines beispielhaften Kegelrads (hier ein Tellerrad), wobei eine einzelne Zahnlücke angedeutet ist, an deren Kopfkanten gemäß Erfindung Kantenrundungen erzeugt wurden;
- **FIG. 2**: zeigt eine schematische Perspektivdarstellung des schleifenden Bearbeitens der Zahnflanken eines Kegelrad-Ritzels gemäß Schritt d. des Verfahrens der Erfindung;
- **FIG. 3**: zeigt eine schematische Perspektivdarstellung des schleifenden Bearbeitens der Kopfrundungen des Kegelrad-Ritzels gemäß Schritt e. des Verfahrens der Erfindung;
- **FIG. 4**: zeigt eine perspektivische Ansicht einer Schleifmaschine, in der das Verfahren der Erfindung zum Einsatz kommen kann.

### Detaillierte Beschreibung

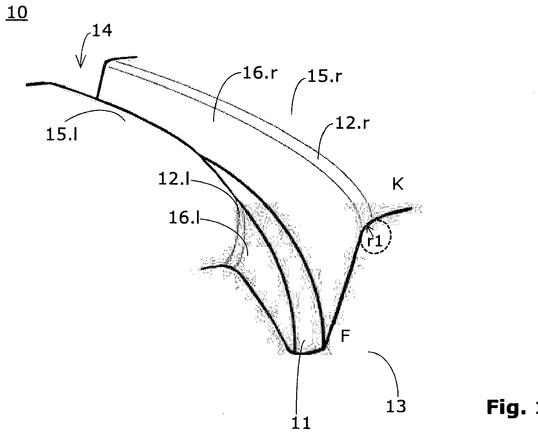

Fig. 1 zeigt einen Abschnitt eines beispielhaften Kegelrades 10, um anhand dieses Kegelrades 10 die wesentlichen Elemente und Details definieren zu können. Die Erfindung kann auch auf andere Zahnräder angewendet werden.

In Fig. 1 ist eine Zahnlücke 14 zu erkennen, die rechts von einer rechten Zahnflanke 16.r und links von einer linken Zahnflanke 16.l begrenzt wird. Rechts ist ein Zahnkopf 15.r und links ist ein Zahnkopf 15.l zu erkennen. Die Zahnlücke 14 tritt durch die Rückenfläche 13 des Kegelrades 10 hindurch. Die beiden Zahnflanken 16.r, 16.l sind durch einen Fuß 11 miteinander verbunden. Der Zahnfuß eines Zahnes wird hier mit F und der Zahnkopf mit K bezeichnet.

Es ergibt sich zwischen den Zahnflanken 16.r, 16.l und dem jeweils angrenzenden Zahnkopf 15.r, 15.l je eine Kopfkante, die relativ scharfkantig sein kann. Im Rahmen der Erfindung geht es um das genaue Schleifen dieser Kopfkanten, um Kopfkantenrundungen 12.r, 12.l zu erzeugen. In Fig. 1 sind diese Kopfkantenrundungen 12.r, 12.l schematisch dargestellt. Mit der Erfindung können statt Kopfkantenrundungen auch Kopfkantenphasen erzeugt werden. Der Begriff "Kopfkantenrundungen" soll auch Kopfkantenphasen mit umfassen.

Die Kopfkantenrundungen 12.r, 12.l haben nach deren Fertigstellung einen genau vorgegebenen Rundungsradius r1, der vorzugsweise entlang der Kopfkanten homogen ist. D.h. der Rundungsradius r1 ist im Bereich der Zehe des Kegelrades 10 identisch mit Rundungsradius r1 im Bereich der Ferse.

Bei mindestens einem Teil der Ausführungsformen werden die Kopfkantenrundungen 12.r, 12.l so definiert, dass sie einen Rundungsradius r1 aufweisen, der sich von der Zehe zur Ferse hin ändert.

Um die Kopfkantenrundungen 12.r, 12.l mit hoher Präzision und innerhalb vorgegebener Fertigungstoleranzen herstellen zu können, wird ein spezielles Verfahren eingesetzt, dessen Schritte im Folgenden beschrieben werden.

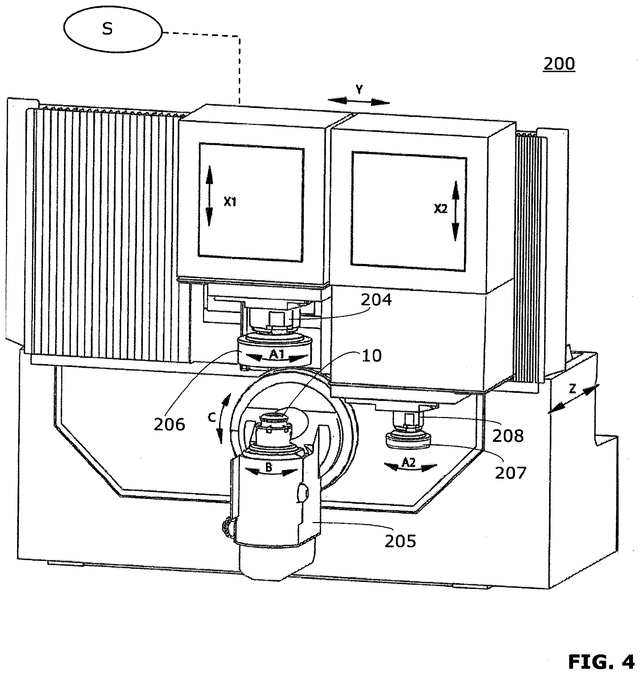

Es geht konkret um ein Verfahren zum schleifenden Nachbearbeiten eines bereits verzahnten Zahnrad-Werkstücks 10 (z.B. eines Kegelrades oder eines Stirnrades). Das Verfahren ist dazu ausgelegt in einer NC-gesteuerten Bearbeitungsmaschine 200 ausgeführt zu werden. Eine beispielhafte Maschine 200 ist in Fig. 4 gezeigt.

Schritt a.: Es wird ein Zahnrad-Werkstück 10 in der Bearbeitungsmaschine 200 bereitgestellt. Das Bereitstellen kann z.B. das (manuelle oder automatisierte) Einbringen des Zahnrad-Werkstücks 10 in die Bearbeitungsmaschine 200 und das Einspannen an einer Werkstückspindel 205 umfassen.

Schritt b.: Es folgt das Bereitstellen eines ersten Schleifwerkzeugs 206 in der Bearbeitungsmaschine 200. In Fig. 4 dient ein Topfschleifscheibe als erstes Schleifwerkzeug 206. Das Bereitstellen kann z.B. das (manuelle oder automatisierte) Einbringen des Schleifwerkzeugs 206 in die Bearbeitungsmaschine 200 und das Einspannen an einer ersten Werkzeugspindel 204 umfassen.

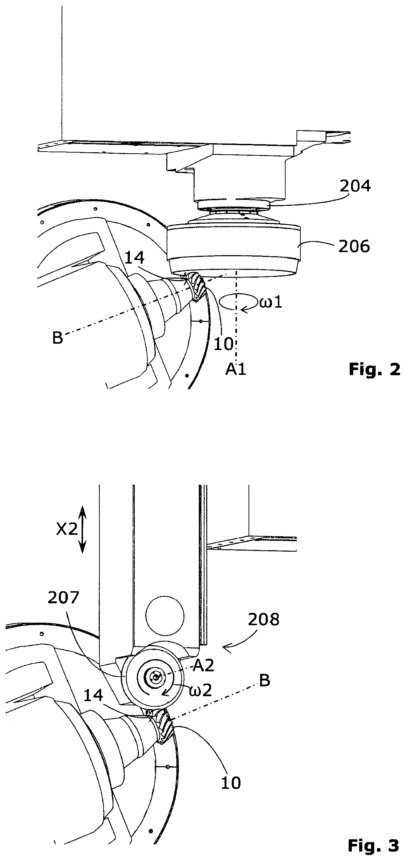

Schritt c.: Weiterhin umfasst das Verfahren das Bereitstellen eines zweiten Schleifwerkzeugs 207 in der Bearbeitungsmaschine 200. In Fig. 4 dient eine kleinere Topfschleifscheibe als zweites Schleifwerkzeug 207. Statt einer Topfschleifscheibe kann aber auch eine Schleifscheibe, wie in Fig. 3 gezeigt, als Schleifwerkzeug 207 zum Einsatz kommen.

Das Bereitstellen kann z.B. das (manuelle oder automatisierte) Einbringen des Schleifwerkzeugs 207 in die Bearbeitungsmaschine 200 und das Einspannen an einer zweiten Werkzeugspindel 208 umfassen.

Die Schritte a., b. und c. können bei allen Ausführungsformen auch in einer anderen Reihenfolge ausgeführt werden, oder sie können mindestens teilweise parallel ausgeführt werden.

Schritt d.: Nach den vorbereitenden Schritten a., b. und c., folgt das schleifende Bearbeiten der Zahnflanken des Zahnrad-Werkstücks 10 mit dem ersten Schleifwerkzeug 206 in der Bearbeitungsmaschine 200. Im Rahmen des Schrittes d. können jeweils die rechte Zahnflanke 16.r und die linke Zahnflanke 16.l einer Zahnlücke gemeinsam geschliffen werden. Es ist aber auch möglich die rechte Zahnflanke 16.r getrennt von der linken Zahnflanke 16.l einer Zahnlücke 14 zu schleifen.

In Fig. 2 ist beispielhaft und in rein schematischer Form das schleifende Bearbeiten einer Zahnflanke der Zahnlücke 14 des Zahnrad-Werkstücks 10 mit dem Werkzeug 206 gezeigt. An dem Zahnrad-Werkstück 10 ist nur ein Teil der Zähne gezeigt. Die Rotation des Werkzeugs 206 um die A1-Achse ist durch die Winkelgeschwindigkeit ω1 gekennzeichnet. Es ist an dieser schematisierten Darstellung zu erkennen, dass die Achsen B und A1 im gezeigten Moment schräg zueinander stehen. Während des schleifenden Bearbeitens einer Zahnflanke wird auch das Zahnrad-Werkstück 10 NC-gesteuert bewegt (z.B. gedreht und linear bewegt).

Bei mindestens einem Teil der Ausführungsformen umfasst der Schritt d. einen mehrstufigen Schleifvorgang, bei dem jede der Zahnflanken 16.r, 16.l mehreren Schleifdurchgängen unterzogen wird.

Das schleifende Bearbeiten der Zahnflanken wird dann unterbrochen, um in einem Schritt e. das schleifende Bearbeiten der Zahnflanken 16.r, 16.l im Übergangsbereich zum Zahnkopf K des Zahnrad-Werkstücks 10 vorzunehmen. Gemäß Erfindung erfolgt das Schleifen des Übergangsbereichs mit einem zweiten Schleifwerkzeug 207. Es kommt hier also ein anderes Schleifwerkzeug zum Einsatz als im Schritt d. Das schleifende Bearbeiten des Übergangsbereichs der Zahnflanken wird ohne Umspannen in derselben Bearbeitungsmaschine 200 vorgenommen, um an dem Zahnrad-Werkstück 10 Kopfkantenrundungen 12.r, 12.l zu erzeugen, wie in Fig. 1 angedeutet. Während des schleifenden Bearbeitens der Kopfkantenrundungen 12.r, 12.l wird auch das Zahnrad-Werkstück 10 NC-gesteuert bewegt (z.B. gedreht und linear bewegt).

Anschließend erfolgt in einem Schritt f. ein weiteres schleifendes Bearbeiten der Zahnflanken 16.r, 16.l des Zahnrad-Werkstücks 10, wobei hier das erste Schleifwerkzeug 206 und/oder das zweite Schleifwerkzeug 207 in der Bearbeitungsmaschine 200 eingesetzt wird.

Es ist für dieses Verfahren wichtig, dass die Schritte d., e. und f. in einer Aufspannung des Zahnrad-Werkstücks 10 in der Bearbeitungsmaschine 200 ausgeführt werden. D.h. es wird durch den Einsatz eines zweiten Schleifwerkzeugs 207 ein Schleifen der Kopfkantenrundungen 12.r, 12.l möglich, ohne dass das Zahnrad-Werkstück 10 umgespannt werden müsste. Ein solches Umspannen kann Ungenauigkeiten mit sich bringen, oder es ist ein größerer Aufwand notwendig, um das Zahnrad-Werkstück 10 nach einem Umspannen wieder in eine genau bekannte Position zu bringen.

Weiterhin ist wichtig, dass nach dem Schleifen der Kopfkantenrundungen 12.r, 12.l noch mindestens ein Schritt f. folgt, um die Zahnflanken 16.r, 16.l mindestens teilweise nochmals schleifend zu überarbeiten. Durch das Ausführen des Schrittes f. kann sichergestellt werden, dass keine Grate im Bereich der Zahnflanken16.r, 16.l stehen bleiben. Solche Grate können sich unter Umständen beim Schleifen der Kopfkantenrundungen 12.r, 12.l bilden.

Um diesen Vorgang 3-dimensional illustrieren zu können, ist in Fig. 2 beispielhaft eine perspektivische Ansicht eines Zahnrad-Werkstücks 10 (hier in Form eines Kegelradritzels) und einer Topfschleifscheibe 206 gezeigt. Die Zahnlücken 14, respektive die Zahnflanken des Zahnrad-Werkstücks 10 werden in diesem Beispiel gemäß Schritt d. geschliffen.

Um weitere Details des Vorgangs 3-dimensional illustrieren zu können, ist in Fig. 3 beispielhaft eine perspektivische Ansicht des Zahnrad-Werkstücks 10 der Fig. 2 und einer Schleifscheibe 207 gezeigt. Die Kopfkantenrundungen 12.r, 12.l des Zahnrad-Werkstücks 10 werden in diesem Beispiel gemäß Schritt e. geschliffen. Die Maschine 200, deren Details in Fig. 2 und 3 andeutungsweise zu erkennen sind, umfasst eine erste Werkzeugspindel 204, um das erste Schleifwerkzeug 206 (hier eine Topfschleifscheibe) aufzunehmen und drehanzutreiben. Der ersten Werkzeugspindel 204 ist die Achse A1 zugeordnet. Außerdem umfasst diese Maschine 200 eine zweite Werkzeugspindel 208, um das zweite Schleifwerkzeug 207 (hier eine Schleifscheibe) aufzunehmen und drehanzutreiben. Der zweiten Werkzeugspindel 208 ist die Achse A2 zugeordnet. Bei dieser speziellen Form der Maschine 200, verläuft die Achse A2 senkrecht zur Achse A1. Bei der Maschine 200, die in Fig. 4 gezeigt ist, verläuft die Achse A2 parallel zur Achse A1.

Um das Verfahren der Erfindung effizient und mit hoher Präzision ausführen zu können, ist die Bearbeitungsmaschine 200 bei mindestens einem Teil der Ausführungsformen mit einer ersten Werkzeugspindel 204 zum Einspannen des ersten Schleifwerkzeugs 206 und mit einer zweiten Werkzeugspindel 208 zum Einspannen des zweiten Schleifwerkzeugs 207 ausgestattet, wie beispielhaft in Fig. 4 gezeigt.

Um die Werkzeuge 206 und 207 mit dem Zahnrad-Werkstück 10 zum schleifenden Bearbeiten in Wechselwirkung bringen zu können, wird bei mindestens einem Teil der Ausführungsformen vor dem Schritt d. eine relative Zustellbewegung ausgeführt, um das erste Schleifwerkzeug 206 relativ zu dem Zahnrad-Werkstück 10 in eine erste Ausgangsposition zu bringen. Außerdem wird vor dem Schritt e. eine relative Zustellbewegung ausgeführt, um das zweite Schleifwerkzeug 207 relativ zu dem Zahnrad-Werkstück 10 in eine (zweite) Ausgangsposition zu bringen. Vor dem Ausführen des Schrittes f. wird eine weitere relative Zustellbewegung ausgeführt, um das erste Schleifwerkzeug 206, oder gegebenenfalls das zweite Schleifwerkzeug 207 relativ zu dem Zahnrad-Werkstück 10 in eine geeignete Ausgangsposition zu bringen.

Das Verfahren der Erfindung ist besonders auf das schleifende Nachbearbeiten von Zahnrad-Werkstücken 10 ausgelegt, die zuvor einer Temperaturbehandlung unterzogen wurden. Mit anderen Worten handelt es sich bei dem Nachbearbeiten um ein Hart-Nachbearbeiten. Das Hart-Nachbearbeiten dient einerseits dazu etwaige Härteverzüge des Zahnrad-Werkstücks 10 zu beseitigen und andererseits dazu die geforderte Oberflächenqualität zu erzielen.

Das Verfahren kann im Prinzip auch auf das fräsende Bearbeiten von Zahnrad-Werkstücken angewendet werden.

Bei mindestens einem Teil der Ausführungsformen wird eine NC-Steuerung S so eingesetzt (siehe Fig. 4), dass im Schritt e. die Kopfkantenrundungen 12.r, 12.l mittels NC-gesteuerter Bewegungen des zweiten Schleifwerkzeugs 207 relativ zum Zahnrad-Werkstück 10 erzeugt werden. Durch das bahngesteuerte Bewegen des zweiten Schleifwerkzeugs 207 relativ zum Zahnrad-Werkstück 10, können die Kopfkantenrundungen 12.r, 12.l exakt gemäß Vorgabe geschliffen werden.

Bei mindestens einem Teil der Ausführungsformen wird statt einer NC-Steuerung S, oder zusätzlich zu der NC-Steuerung S, ein Softwaremodul SM eingesetzt, um die Kopfkantenrundungen 12.r, 12.l exakt gemäß Vorgabe schleifen zu können.

Fig. 4 zeigt, wie bereits erwähnt, eine perspektivische Ansicht einer Schleifmaschine 200, in der das Verfahren der Erfindung zum Einsatz kommen kann. Eine entsprechende Maschine 200 umfasst bei mindestens einem Teil der Ausführungsformen eine erste Werkzeugspindel 204, die zum Einspannen des ersten Schleifwerkzeugs 206 ausgelegt ist. Diese erste Werkzeugspindel 204 weist einen Drehantrieb auf, der es ermöglicht das erste Schleifwerkzeug 206 um eine erste Werkzeugspindelachse A1 drehanzutreiben. Weiterhin umfasst die Maschine 200 eine zweite Werkzeugspindel 208, die zum Einspannen des zweiten Schleifwerkzeugs 207 ausgelegt ist. Diese zweite Werkzeugspindel 208 weist einen separaten Drehantrieb auf, der es ermöglicht das zweite Schleifwerkzeug 207 um eine zweite Werkzeugspindelachse A2 drehanzutreiben.

Die beiden Werkzeugspindelachse A1 und A2 können parallel verlaufen, wie in Fig. 4 gezeigt. Bei mindestens einem Teil der Ausführungsformen verlaufen diese Achsen A1 und A2 jedoch nicht parallel zu einander.

Eine Maschine 200 umfasst bei mindestens einem Teil der Ausführungsformen zusätzlich eine Werkstückspindel 205, die zum Einspannen des Zahnrad-Werkstücks 10 ausgelegt ist, wie in Fig. 4 beispielhaft gezeigt. Diese Werkstückspindel 205 weist einen separaten Drehantrieb auf, der es ermöglicht das Zahnrad-Werkstück 10 kontrolliert um eine Werkstückspindelachse B drehanzutreiben. Bei mindestens einem Teil der Ausführungsformen handelt es sich bei der Werkstückspindelachse B um eine NC-gesteuerte Achse.

Zusätzlich umfasst die Maschine 200 bei mindestens einem Teil der Ausführungsformen weitere Achsen, die mindestens teilweise NC-gesteuert sind. Bei der Ausführungsform der Fig. 4 sind dies die Linearachse X1, die Linearachse X2, die Linearachse Y und die Linearachse Z. Diese Achsen X1, X2, Y, Z können senkrecht zueinander stehen, wie die x-, y- und z-Achsen eines kartesischen Koordinatensystems. Es sind aber auch andere Achskonstellationen möglich.

Zusätzlich umfasst die Maschine 200 bei mindestens einem Teil der Ausführungsformen eine Schwenkachse, die in Fig. 4 als C-Achse bezeichnet ist und die senkrecht steht zu einer Ebene, die durch die Achsen X1, X2 und Y aufgespannt wird.

Um in den Schritten d. und f. das schleifende Bearbeiten der Zahnflanken 16.r, 16.l mit dem ersten Werkzeug 206 vornehmen zu können, werden die Bewegungen der Achsen X1, Y, Z, B und C durch die NC-Steuerung S gesteuert, während das erste Schleifwerkzeug 206 um die Achse A1 drehangetrieben wird. Im Schritt f. kann, wie bereits erwähnt das erste Schleifwerkzeug 206 und/oder das zweite Schleifwerkzeug 207 eingesetzt werden. Falls das zweite Schleifwerkzeug 207 eingesetzt wird, nimmt die NC-Steuerung S Bewegungen der Achsen X2, Y, Z, B und C vor, während das zweite Schleifwerkzeug 207 um die Achse A2 drehangetrieben wird.

Um im Schritt e. das schleifende Bearbeiten der Kopfkantenrundungen 12.r, 12.l vornehmen zu können, werden die Bewegungen der Achsen X2, Y, Z, B und C durch die NC-Steuerung S und/oder durch ein Software-Modul SM gesteuert, während das zweite Schleifwerkzeug 207 um die Achse A2 drehangetrieben wird.

Vorzugsweise kommt bei allen Ausführungsformen eine Maschine 200 zum Einsatz, die - wie in Fig. 4 beispielhaft gezeigt - eine vertikale Konstellation aufweist, bei der die Werkzeuge 206 und 207 hängend (kopfüber) oberhalb des Zahnrad-Werkstücks 10 angeordnet sind.

Vorzugsweise kommt bei allen Ausführungsformen je eine Topfschleifscheibe als erstes Schleifwerkzeug 206 und als zweites Schleifwerkzeug 207 zum Einsatz, wobei das zweite Schleifwerkzeug 207 vorzugsweise einen kleineren Durchmesser aufweist als das erste Schleifwerkzeug 206.

**Bezugszeichen:**

| | |
|---|---|
| Zahnrad / Zahnrad-Werkstück / Keqelrad / Kegelrad-Werkstück | 10 |
| Fuß | 11 |
| Kopfkantenrundung | 12.r, 12.l |
| Kegelstumpfmantelfläche / Rückenfläche | 13 |
| Zahnlücke | 14 |
| rechte Zahnflanke / konkave Zahnflanke | 16.r |
| linke Zahnflanke / konvexe Zahnflanke | 16.l |
| | |
| NC-gesteuerte Bearbeitungsmaschine / NC-gesteuerte Verzahnmaschine / NC-Verzahnmaschine | 200 |
| erste Werkzeugspindel | 204 |
| Werkstückspindel | 205 |
| erstes Schleifwerkzeug (z.B. Topfschleifscheibe) | 206 |
| zweites Schleifwerkzeug / Schleifscheibe | 207 |
| zweite Werkzeugspindel | 208 |
| | |
| erste Werkzeugspindelachse | A1 |
| zweite Werkzeugspindelachse | A2 |
| Werkstückspindelachse | B |
| Schwenkachse/Drehachse | C |
| Zahnfuß | F |
| Rundunqsradius | r1 |
| NC-Steuerunq | S |
| Software(modul) | SM |
| Drehbewegung / Winkelqeschwindigkeit | ω1, ω2 |
| Koordinatenachse / Linearachse | X1 |
| Koordinatenachse / Linearachse | X2 |
| Koordinatenachse / Linearachse | Y |
| Koordinatenachse / Linearachse | Z |

## Patentansprüche

1. Verfahren zum schleifenden Nachbearbeiten eines bereits verzahnten Zahnrad-Werkstücks (10) in einer NC-gesteuerten Bearbeitungsmaschine (200), mit den Schritten:
a. Bereitstellen des Zahnrad-Werkstücks (10) in der Bearbeitungsmaschine (200),
b. Bereitstellen eines ersten Schleifwerkzeugs (206) in der Bearbeitungsmaschine (200),
c. Bereitstellen eines zweiten Schleifwerkzeugs (207) in der Bearbeitungsmaschine (200),
d. schleifendes Bearbeiten von mindestens einer Zahnflanke (16.r, 16.l) des Zahnrad-Werkstücks (10) mit dem ersten Schleifwerkzeug (206) in der Bearbeitungsmaschine (200), und
e. schleifendes Bearbeiten mindestens einer Zahnflanke (16.r, 16.l) im Übergangsbereich zum Zahnkopf (15.r, 15.l) des Zahnrad-Werkstücks (10) mit dem zweiten Schleifwerkzeug (207) in der Bearbeitungsmaschine (200), um an dem Zahnrad-Werkstück (10) eine Kopfkantenrundung (12.r, 12.l) zu erzeugen, **gekennzeichnet durch**, nach dem Schleifen der Kopfkantenrundung (12.r, 12.l) gemäß Schritt e.:
f. weiteres schleifendes Bearbeiten mindestens der Zahnflanke (16.r, 16.l) des Zahnrad-Werkstücks (10) mit dem ersten Schleifwerkzeug (206) und/oder dem zweiten Schleifwerkzeug (207) in der Bearbeitungsmaschine (200).

2. Verfahren nach Anspruch 1, **dadurch gekennzeichnet, dass** die Schritte d., e. und f. in einer Aufspannung des Zahnrad-Werkstücks (10) in der Bearbeitungsmaschine (200) ausgeführt werden.

3. Verfahren nach Anspruch 1 oder 2, **dadurch gekennzeichnet, dass** die Bearbeitungsmaschine (200) eine erste Werkzeugspindel (204) zum Einspannen des ersten Schleifwerkzeugs (206) und eine zweite Werkzeugspindel (208) zum Einspannen des zweiten Schleifwerkzeugs (207) umfasst.

4. Verfahren nach Anspruch 2, **dadurch gekennzeichnet, dass**
- vor dem Schritt d. eine relative Zustellbewegung ausgeführt wird, um das erste Schleifwerkzeug (206) relativ zu dem Zahnrad-Werkstück (10) in eine Ausgangsposition zu bringen,
- vor dem Schritt e. eine relative Zustellbewegung ausgeführt wird, um das zweite Schleifwerkzeug (207) relativ zu dem Zahnrad-Werkstück (10) in eine Ausgangsposition zu bringen,
- vor dem Schritt f. eine relative Zustellbewegung ausgeführt wird, um das erste Schleifwerkzeug (206) relativ zu dem Zahnrad-Werkstück (10) in eine Ausgangsposition zu bringen.

5. Verfahren nach einem der vorausgehenden Ansprüche, **dadurch gekennzeichnet, dass** die Schritte d. bis f. nach einer Temperaturbehandlung des Zahnrad-Werkstücks (10) durchgeführt werden.

6. Verfahren nach einem der vorausgehenden Ansprüche 1 - 5, **dadurch gekennzeichnet, dass** es sich um ein Verfahren zum schleifenden Hart-Nachbearbeiten handelt.

7. Verfahren nach einem der vorausgehenden Ansprüche, **dadurch gekennzeichnet, dass** im Schritt e. die Kopfkantenrundungen mittels NC-gesteuerter Bewegungen des zweiten Schleifwerkzeugs (207) relativ zum Zahnrad-Werkstück (10) erzeugt werden.

8. Verfahren nach Anspruch 7, **dadurch gekennzeichnet, dass** die NC-gesteuerten Bewegungen durch eine NC-Steuerung (S) oder durch ein Softwaremodul (SM) der Bearbeitungsmaschine (200) ausgeführt werden.

9. Verfahren nach einem der vorausgehenden Ansprüche, **dadurch gekennzeichnet, dass** das Verfahren bei einem Zahnrad-Werkstück (10) zum Einsatz kommt, das zur Verwendung in einem Helikopter oder Flugzeug bereitgestellt wird.

## Claims

1. A method for the grinding finish machining of an already toothed gearwheel workpiece (10) in an NC-controlled machine tool (200), comprising the following steps:
a. providing the gearwheel workpiece (10) in the machine tool (200),
b. providing a first grinding tool (206) in the machine tool (200),
c. providing a second grinding tool (207) in the machine tool (200),
d. grinding machining of at least one tooth flank of the gearwheel workpiece (10) using the first grinding tool (206) in the machine tool (200),
e. grinding machining of at least one tooth flank (16.r, 16.1) in the transition region to the tooth head (15.r, 15.1) of the gearwheel workpiece (10) using the second grinding tool (207) in the machine tool (200) to generate a head edge rounding (12.r, 12.1) on the gearwheel workpiece (10),
**characterized in that**, after grinding machining of the head edge rounding (12.r, 12.1) of step e.:
f. further grinding machining of at least one tooth flank (16.r, 16.1) of the gearwheel workpiece (10) using the first grinding tool (206) and/or the second grinding tool (207) in the machine tool (200).

2. The method according to claim 1, **characterized in that** steps d., e., and f. are executed in one chucking of the gearwheel workpiece (10) in the machine tool (200).

3. The method according to claim 1 or 2, **characterized in that** the machine tool (200) comprises a first tool spindle (204) for chucking the first grinding tool (206) and a second tool spindle (208) for chucking the second grinding tool (207).

4. The method according to claim 2, **characterized in that**
- before step d., a relative infeed movement is executed to move the first grinding tool (206) into a starting position in relation to the gearwheel workpiece (10),
- before step e., a relative infeed movement is executed to move the second grinding tool (207) into a starting position in relation to the gearwheel workpiece (10),
- before step f., a relative infeed movement is executed to move the first grinding tool (206) into a starting position in relation to the gearwheel workpiece (10).

5. The method according to any one of the preceding claims, **characterized in that** steps d. to f. are carried out after a temperature treatment of the gearwheel workpiece (10).

6. The method according to any one of preceding claims 1 to 5, **characterized in that** it is a method for grinding hard finish machining.

7. The method according to any one of the preceding claims, **characterized in that** in step e., the head edge roundings are generated by means of NC-controlled movements of the second grinding tool (207) in relation to the gearwheel workpiece (10).

8. The method according to claim 7, **characterized in that** the NC-controlled movements are executed by an NC-controller (S) or by a software module (SM) of the machine tool (200).

9. The method according to any one of the preceding claims, **characterized in that** the method is used in a gearwheel workpiece (10) which is provided for use in a helicopter or aircraft.

## Revendications

1. Procédé pour réusiner par rectification une pièce de roue dentée (10) déjà dentée dans une machine d'usinage à commande numérique (200), comprenant les étapes consistant à :
a) fournir la pièce de roue dentée (10) dans la machine d'usinage (200),
b) fournir un premier outil de rectification (206) dans la machine d'usinage (200),
c) fournir un deuxième outil de rectification (207) dans la machine d'usinage (200),
d) usiner par rectification au moins un flanc de dent (16.r, 16.l) de la pièce de roue dentée (10) avec le premier outil de rectification (206) dans la machine d'usinage (200), et
e) usiner par rectification au moins un flanc de dent (16.r, 16.l) dans la zone de transition vers la tête de dent (15.r, 15.l) de la pièce de roue dentée (10) avec le deuxième outil de rectification (207) dans la machine d'usinage (200) pour produire sur la pièce de roue dentée (10) une courbure des bords de tête (12.r, 12.l), **caractérisé en ce que**, après la rectification de la courbure des bords de tête (12.r, 12.l) conformément à l'étape e., il est procédé à l'étape suivante qui consiste à :
f) usiner encore une fois par rectification au moins le flanc de dent (16.r, 16.l) de la pièce de roue dentée (10) avec le premier outil de rectification (206) et/ou le deuxième outil de rectification (207) dans la machine d'usinage (200).

2. Procédé selon la revendication 1, **caractérisé en ce que** les étapes d., e. et f. sont réalisées en un seul serrage de la pièce de roue dentée (10) dans la machine d'usinage (200).

3. Procédé selon la revendication 1 ou 2, **caractérisé en ce que** la machine d'usinage (200) comprend une première broche d'outil (204) pour fixer le premier outil de rectification (206) et une deuxième broche d'outil (208) pour fixer le deuxième outil de rectification (207).

4. Procédé selon la revendication 2, **caractérisé en ce que**
- avant l'étape d. il est procédé à un mouvement d'avance relatif pour amener le premier outil de rectification (206) dans une position de départ par rapport à la pièce de roue dentée (10),
- avant l'étape e. il est procédé à un mouvement d'avance relatif pour amener le deuxième outil de rectification (207) dans une position de départ par rapport à la pièce de roue dentée (10),
- avant l'étape f. il est procédé à un mouvement d'avance relatif pour amener le premier outil de rectification (206) dans une position de départ pour rapport à la pièce de roue dentée (10).

5. Procédé selon l'une des revendications précédentes, **caractérisé en ce que** les étapes d. à f. sont réalisées après un traitement thermique de la pièce de roue dentée (10).

6. Procédé selon l'une des revendications 1 à 5, **caractérisé en ce qu'**il s'agit d'un procédé de réusinage dur par rectification.

7. Procédé selon l'une des revendications précédentes, **caractérisé en ce qu'**à l'étape e. les courbures de bords de tête sont produites à l'aide de mouvements commandés numériquement du deuxième outil de rectification (207) par rapport à la pièce de roue dentée (10).

8. Procédé selon la revendication 7, **caractérisé en ce que** les mouvements commandés numériquement sont effectués par une commande numérique (S) ou par un module logiciel (SM) de la machine d'usinage (200).

9. Procédé selon l'une des revendications précédentes, **caractérisé en ce que** le procédé est utilisé sur une pièce de roue dentée (10) qui est destinée à être utilisée dans un hélicoptère ou un avion.
